# EUROPEAN PATENT APPLICATION

(11) **EP 2 015 322 A1**
(43) Date of publication of application: **14.01.2009**
(21) Application number: 07013816.9
(22) Date of filing: 13.07.2007
(51) Int. Cl.: H01G 2/08, H01G 9/08, H01G 4/38

(54) **Capacitor module with optimized heat transmission**

(71) Applicant: Panasonic Corporation, Kadoma-shi Osaka 571-8501 (JP)
(72) Inventor: Meincke, Steffen, 21442 Toppenstedt (DE); Bogdan, Holger, 29574 Ebstorp (DE); Glapa, Norbert, 21339 Lüneburg (DE)
(74) Representative: UEXKÜLL & STOLBERG

(57) **Abstract**

The present invention relates to a capacitor module (100) having at least two capacitor cells (11-14) each having a top side (11a, 12a, 13a, 14a) and a bottom side (11b, 12b, 13b, 14b) and being arranged adjacent to each other to form a pack (10) of capacitor cells, wherein said capacitor cells each having negative (11n, 12n, 13n, 14n) and positive (11p, 12p, 13p, 14p) terminals at the top and/or bottom sides electrically connected to respective terminals of adjacent cells to form parallel and/or series connections between the individual capacitor cells, a base element (20) made of heat conductive material for supporting the pack of capacitor cells, wherein the base element being shaped for receiving the bottom sides of the capacitor pack cells, and a heat transmission element (40) provided between the pack (10) of capacitor cells (11-14) and the base element (20).

## Description

The present invention relates in general to a capacitor module comprising a plurality of capacitor cells (energy storage cells) mounted to a base element for supporting the capacitor cells, and means for optimizing heat transmission between the capacitor cells and the base element.

In general, a capacitor module for storing electrical energy) includes multiple interconnected cells of individual capacitors (i.e. a pack of energy storage cells) that store an electrical charge. For vehicle applications, for example, the capacitor cells must be held in place and need to be cooled. During the charging and discharging operation of the capacitor cells, parasitic effects cause the cell temperature increase. Thus, cooling (i.e. heat transmission to the surrounding) is required to minimize increased temperature operation that would degrade the energy storage and useful life of the capacitor cells.

An additional aspect relates to the construction of the individual capacitor cells. Energy storage cells or capacitor cells for said capacitor modules generally require an over-pressure valve or vent valve. Thus, gas produced in case of excessive heat generation can be discharged in controlled manner to prevent damage of the capacitor being dangerous for the environment. Therefore, in case of a vertical (upright) orientation of the capacitor module and the capacitor cells, the over-pressure valve is usually arranged at the top side or top portion of the capacitor cells to minimize the risk electrolyte is leaking out of said over-pressure valve.

To realize simple electrical connections between side-by-side arranged capacitors in a series configuration (electrical series connection) at the adjacent located end sides of the capacitors, in a first configuration, two different types of capacitors ("types of cells") are manufactured, i.e., a first type of cells is provided with an over-pressure valve at the positive electrode side, and a second type of cells being provided with an over-pressure valve at the negative electrode side. In both types of cells, the over-pressure valve is provided at the top side of the cell, and the positive electrode of the first type of cells or the negative electrode of the second type of cells is also provided at the top of the respective cell. The positive and negative electrodes at the top side (adjacent to the over-pressure valves) can be screw electrodes, for example. In a series configuration of a plurality of capacitor cells, these capacitor cells of different types of cells are alternately arranged adjacent to each other, and these different types of capacitor cells are series-connected to each other in appropriate manner and are arranged in upright orientation to form said capacitor module. Thus, the over-pressure valves (as well as the alternating positive and negative electrodes) are positioned at the top side of the alternating cell types. In case of a parallel connection, it is obvious that capacitors of only one type of cells are required.

Alternatively, in a second configuration, only one type of cells is manufactured. In this configuration of cells, the over-pressure valve is provided at the top of the cells. However, in contrary to the first mentioned configuration of cells, it is not necessary to produce two different types of cells having different polarities. Instead, the positive electrode, for example, can be provided at the "over-pressure valve" top side of the cells, whereas the negative electrode is provided at the bottom side of the cells. Preferably, these cells comprise a pot-shaped housing having a closed bottom electrically coupled to or integral with a cylindrical circumferential side wall which is electrically isolated against the top electrode.

In a third configuration, the negative and positive electrodes can be provided at the top side of the cells adjacent to the over-pressure valve. Alternatively, in a fourth configuration, it is of course possible to arrange the negative and positive electrodes at the bottom side of the cells opposite to the over-pressure valve.

The above mentioned arrangements of capacitor cells have the advantage that the packs of multiple, side-by-side and parallel arranged capacitor cells are arranged in a space saving configuration. However, the disadvantage of such a closely packed structure is the risk of over-heating during the charging and discharging operation, in particular when such capacitor packs or modules are used in vehicle applications. In vehicle applications, the cells are frequently charged and discharged.

DE 10 2005 007 607 A1 discloses a capacitor module comprising multiple capacitor cells arranged within a housing which is filled with a liquid used for absorbing emissions from the capacitor cells, such as electrolyte. However, a liquid-tight housing is necessary which leads to increased production costs. Further, the housing is bulky and occupies excessive space in a vehicle.

It is an object of the present invention, to alleviate the above mentioned disadvantages and to provide a cost-effective capacitor module having improved heat transmission and heat dissipation properties.

The above objects are achieved by a capacitor module as defined in claim 1. Preferred embodiments of the capacitor module are set out in the depended claims.

According to the present invention, the capacitor module comprises at least two capacitor cells each having a top side and a bottom side and which are arranged adjacent to each other to form a pack of capacitor cells. The capacitor cells have negative and positive terminals (electrodes) at the top and/or bottom sides thereof. The terminals of the individual cells are electrically connected to respective terminals of adjacent cells to form parallel and/or series electrical connections between the individual capacitor cells. The capacitor module further comprises a base element preferably made of a heat conductive material for supporting the pack of capacitor cells, wherein the base element being shaped for receiving the bottom portions of the capacitor pack cells.

Preferably, the capacitor pack cells of the capacitor module (in the operating position or mounting position thereof) are oriented in a substantially vertical and upright orientation. In a preferred configuration, each of the capacitor cells includes an over-pressure valve located at the top side of each of the cells, and the bottom portion of the capacitor cells is received within said base element.

The base element of the capacitor module comprises a base plate and a support element which is adapted to support the received bottom sides or bottom portions of the capacitor pack cells. Preferably, the base element is made of heat conductive material, for example metal, copper, brass or aluminum. In a preferred embodiment, the support element is realized by a support wall or support wall segments welded to (or otherwise secured to or integral with) the upper surface of a base plate. The wall and the wall segments, respectively, are preferably made of heat conductive material, for example metal, copper, brass or aluminum. Further, the support wall (or the support wall segments) is shaped to correspond to the outer circumferential surface of the bottom portion of the adjacent arranged capacitor cells, i.e. the circumferential shape of the bottom side or bottom portion of the cell pack received within the support element (i.e. within the base element formed by the base plate and the support element). Thus, the bottom portion of a pack of at least two adjacent arranged capacitor cells can be inserted into the support element formed by the surrounding support wall(s) and the base plate. It is note that the term "support wall" is used as an example for the wall or the wall segments made of heat conductive material as mentioned above. It is obvious that other heat conductive materials instead of metal can be used for the support plate and the support wall (support wall segments).

To increase the contact area between the capacitor pack cells (in particular the bottom portions or bottom sides of capacitor pack cells) and the base element, a heat transmission element is provided between the received bottom portion of the capacitor pack and the base element. Preferably, the heat transmission element is a solid or elastic or flexible or liquid or flowable material that is inserted or molded or poured within the space between the bottom portion of the capacitor cells pack and the base element (i.e. the base plate and the support element). According to one embodiment, the heat transmission element is a preformed plastic element, the shape of which at least partly corresponds to the shape of the gaps (space) between the bottom portion of the capacitor cells pack and the base element. According to an alternative embodiment, the heat transmission element is a thermal pad that is inserted into the base element, i.e. into the space defined within the support element. The shape of the thermal pad is configured to correspond the cross sectional area of the support element. Thus, the thermal pad covers the top surface of base plate within the support element. The thermal pad is made of a rubber-like material. In all cases, the heat transmission element is selected to have excellent heat transmission properties. At the same time, the potting material preferably also has electrically isolating properties.

To achieve a reliable electrical insulation between the capacitor cells and the base element, a constant thickness of the heat transmission element between the outer surface of the bottom portion of the capacitor pack cells and the inner surface of the base element is required. According to one aspect of the present invention, this problem is solved by means of the spacer element which is arranged between the outer surface of bottom portion of the capacitor cells pack and the inner surface of the base element. The purpose of such a spacer element is to provide a constant and predetermined distance between the capacitor pack cells and the base element. In a preferred embodiment, the spacer element consists of a skeleton-like frame of preferably electrically insulating and heat conductive plastic material. After inserting the spacer element and the pack of capacitor cells into the inner space of the base element, liquid or flowable heat transmission material (potting material) is poured into the remaining gaps between the frame element, the base element and the capacitor cells. It is obvious from above that the potting material is hardenable by heat or by means of other techniques known by a person skilled in the art.

In a preferred embodiment, the potting material may include small pearls made of glass, plastic or other materials which have a diameter that corresponds to the desired distance between the capacitor pack cells and the base element. Thus, when the inner space of the base element is partly filled with liquid potting material including a plurality of such pearls, and when the capacitor pack cells are inserted and pressed into the base element, the potting material together with the pearls is displaced such that a layer of potting material including the pearls is disposed between the capacitor pack cells and the base element to maintain a defined distance therebetween.

According to another preferred embodiment, the heat transmission element in form of a thermal pad is inserted within to support element to cover at least partly the upper surface of the base plate of the base element within the support element. Thereafter, the capacitor cells pack is inserted within the base element to provide heat transmission coupling between the capacitor cells pack and the base element. To ensured electrical insulation and/or a desired distance between the capacitor cells pack and the support element, a spacer element is arranged between the circumferential surface of the capacitor cells pack and the inner surface of the support element.

The invention and details, features and advantages thereof will in the following be described in connection with different, non-limiting embodiments shown in the drawings, in which:
- Figure 1: shows a perspective view of a pack of four adjacent arranged capacitor cells;
- Figure 2: shows a perspective view of a base element of the present invention for supporting the capacitor pack cells;
- Figure 3: shows a shows a perspective view of an exemplary spacer element of the present invention;
- Figure 4: shows a perspective view of an exemplary embodiment of the heat transmission element of the present invention;
- Figure 5: shows a perspective exploded view of an exemplary embodiment of the capacitor module of the present invention;
- Figure 6: shows a perspective view of the assembled capacitor module of the present invention;
- Figure 7: shows a perspective view of the electrical connection between several capacitor pack cells of the same type of cells according to a preferred embodiment of the present invention.

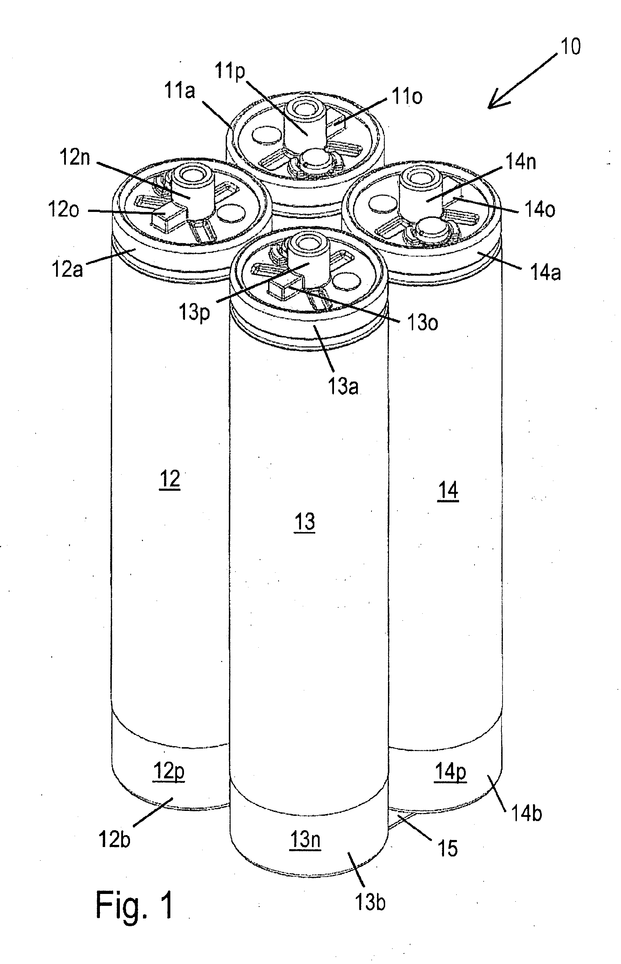

As shown in Figure 1, an exemplary capacitor pack 10 of the capacitor module 100 of the present invention comprises four capacitor cells 11-14 of a first configuration of cells each having a top side 11a, 12a, 13a, 14a and a bottom side 11b, 12b, 13b, 14b, and being arranged adjacent to each other to form said pack of capacitor cells. The capacitor cells 11-14 have negative terminals 11n, 12n, 13n, 14n and positive terminals 11p, 12p, 13p, 14p at the top and/or bottom sides thereof. The terminals of the individual cells are electrically connected to respective terminals of adjacent cells to form parallel and/or series connections between the individual capacitor cells 11-14. As in Figure 1, a conductor plate 15 is welded to the negative terminal 13n of cell 13 and to the positive terminal 14p of cell 14, and a conductor plate 16 (not shown) is welded to the negative terminal 11n of cell 11 and to the positive terminal 12p of cell 12, and the positive screw electrode 13p of cell 13 is electrically connected (not shown) to the negative screw electrode 12n of cell 12 to provide a series configuration of the cells. Finally, the top sides of each of the cells 11-14 is provided with an over-pressure valve 11o to 14o.

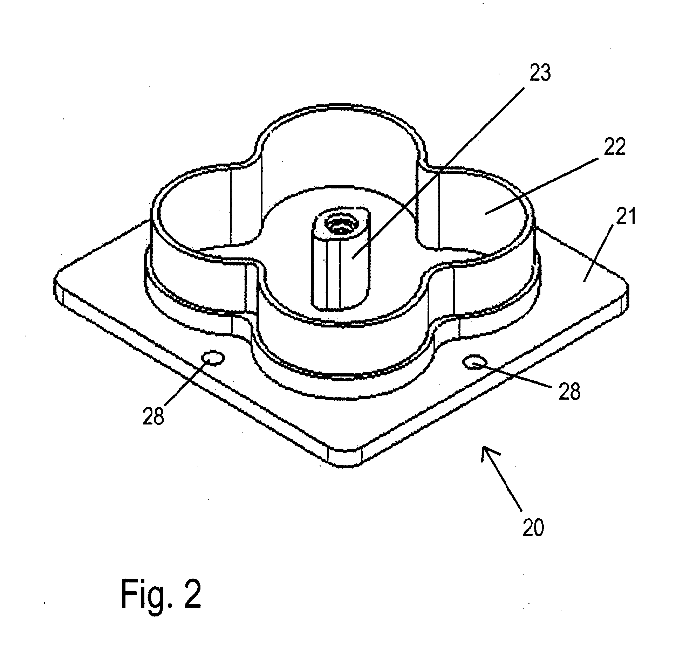

The capacitor module of the present invention further comprises a base element 20 made of heat conductive material for supporting the pack 10 capacitor cells of Figure 1. As shown in Figure 2, the base element 20 is shaped for receiving the bottom sides (bottom portions) 11b, 12b, 13b, 14b of the capacitor pack cells 11-14. As mentioned above with reference to Figure 1, each of the capacitor cells 11-14 includes an over-pressure valve 11o-14o located at the top side of each of the cells, and the bottom side of the capacitor cells is received within said base element 20. The base element 20 of the capacitor module comprises a base plate 21 and a support element 22 which are adapted to support the received bottom sides of the capacitor pack cells. Preferably, the base element 20 is made of heat conductive material, for example metal, copper, brass or aluminum. In a preferred embodiment, the support element 22 is realized by a support wall welded to (or otherwise secured to or integral with) the upper surface of a base plate 21 wherein the support wall is shaped to correspond to the outer circumferential surface of the bottom sides of said adjacent arranged capacitor pack cells. In the embodiment of Figure 2, a continuous support wall 22 of four semi-circles is provided, however, other support structures are possible, for example, several wall segments. It is obvious that various heat conductive materials can be used for the support plate and the support wall or the support wall segments. In the middle of the base element 20, a post member 23 having an internal thread is provided. The post member,23 can be used for securing a threaded rod (not shown) to provide additional support means for the capacitor pack cells. For example, the upper sides of the capacitor cells are coupled to a securing element which is attached via the threaded rod to the post member.

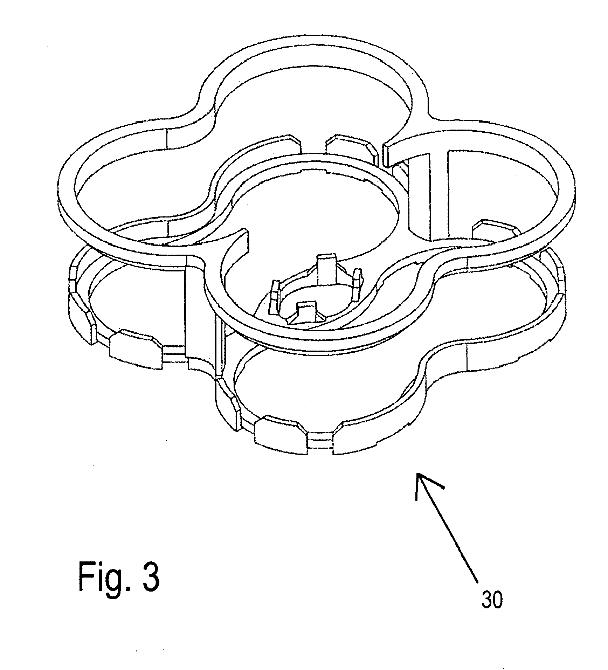

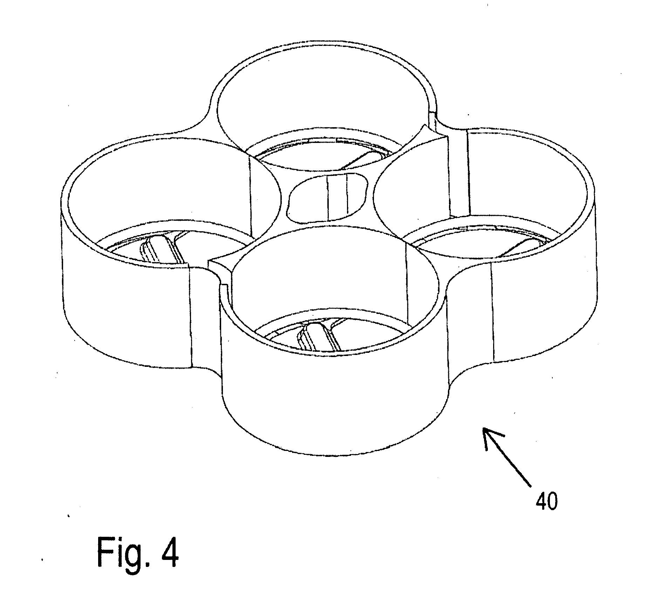

Figure 3 shows an exemplary embodiment of the spacer element 30 of the present invention which is arranged between the outer surfaces of the bottom sides 11b, 12b, 13b, 14b of the capacitor cells pack 10 and the inner surface of the base element 20. The spacer element 30 acts as an insulation means for electrically insulating the bottom terminal of the cells against the base element 20. Further, by means of the spacer element 30 a constant and predetermined distance between the capacitor pack cells and the base element 20 is achieved. In the embodiment of Figure 3, the spacer element 30 is a frame or skeleton made of insulating plastic material. Preferably, the material of the spacer element has very good heat conducting properties. According to one aspect of the invention, the spacer element 30 is inserted into the base element 20. Thereafter, the pack of capacitor cells is inserted into the spacer element 30. Thus, the spacer element 30 electrically insulates the terminals of the capacitor cells against the base element 20 and provides heat conduction between the cell terminals and the base element. To improve the electrical insulation and heat conduction, liquid or flowable potting material can be poured into the remaining gaps created by the spacer element. Preferably, the potting material is a liquid but hardenable material. For the above reasons, the potting material should have excellent heat transmission and electrically insulating properties. Alternatively to the flowable potting material, a prefabricated heat transmission element 40 can be used, as shown in Figure 4. By means of such a heat transmission element 40, a constant thickness of the material between the capacitor pack cells and the base element (i.e. the walls and the 22 and the base plate 21), and thus, a reliable electrical insulation is achieved. Further, the excellent heat transmission properties of the heat transmission element 40 provide heat conduction between the cells and the base element.

According to another embodiment of the invention, instead of the spacer element 30 or the heat transmission element 40, liquid potting material can be used wherein said potting material includes a plurality of small pearls, preferably made of glass, plastic or other suitable materials. The diameter of the pearls corresponds to the desired distance between the capacitor pack cells and the base element. In this embodiment, first, the inner space of the base element is partly filled with said pearls containing potting material. Thereafter, the capacitor cell pack 10 is inserted and pressed into the base element. Thus, the pearls containing potting material is displaced such than a layer of said potting material including the pearls is disposed between the capacitor pack cells and the base element to maintain a defined distance therebetween.

According to an alternative embodiment, the heat transmission element is a thermal pad that in inserted into the base element 20 within the support element 22, 23. The shape of the thermal pad is configured to correspond the cross sectional area of the support element 22, 23. Thus, the thermal pad covers the top surface of base plate 21 within the support element 22, 23. The thermal pads are made of a rubber-like material with heat conduction properties. Additionally, a spacer element 30 is provided between the outer circumferential walls of the capacitor cells pack and the inner surfaces of the support element 22 to achieve a predetermined distance therebetween, and also an electrical insulation.

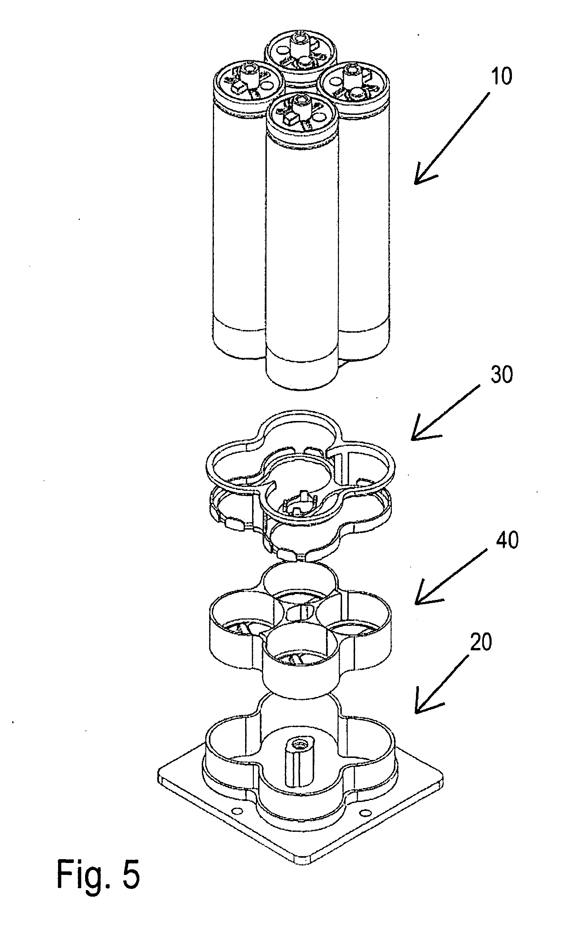

Figure 5 shows a perspective exploded view of a preferred capacitor module 100 of the present invention. The capacitor module comprises a capacitor cell pack 10, a spacer element 30, a heat transmission element 40 and a base element 20.

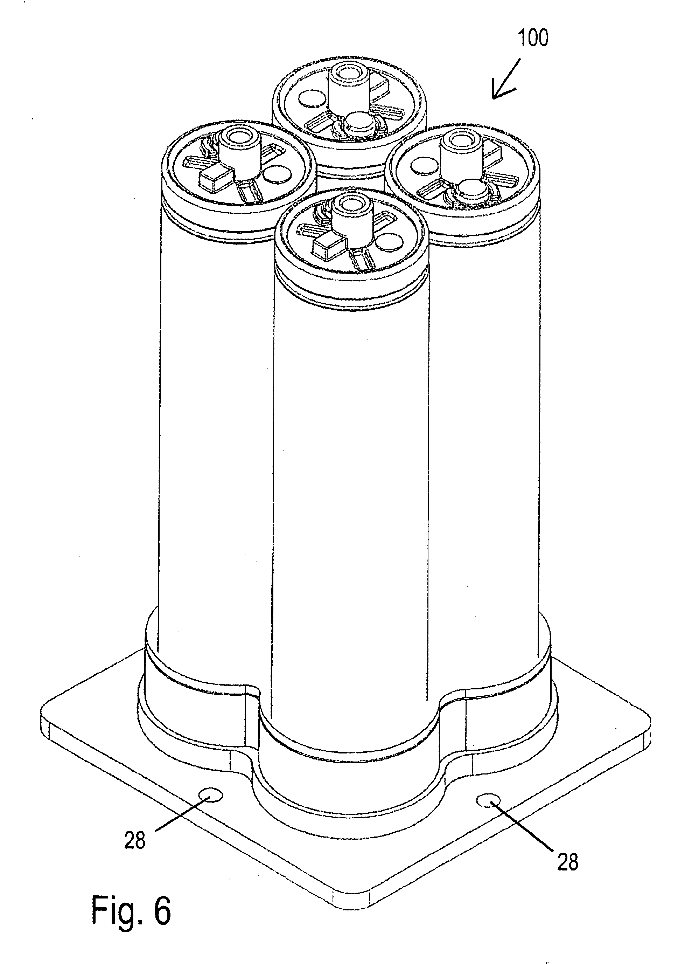

Figure 6 shows the assembled capacitor module 100 of Figure 5. As further shown in Figure 6, the base plate 21 includes several bores 28 for securing the whole capacitor module 100 to a mounting structure in a vehicle, for example.

As mentioned above, two different configurations of capacitor cells can be used, i.e., capacitor cells of a first configuration wherein either the positive electrode or the negative electrode is provided at the top of the cells adjacent the pressure valve as shown in Figure 1. This configuration of capacitor cells has the disadvantage that two different types of capacitor cells have to be manufactured whereby the costs for production and logistics increase.

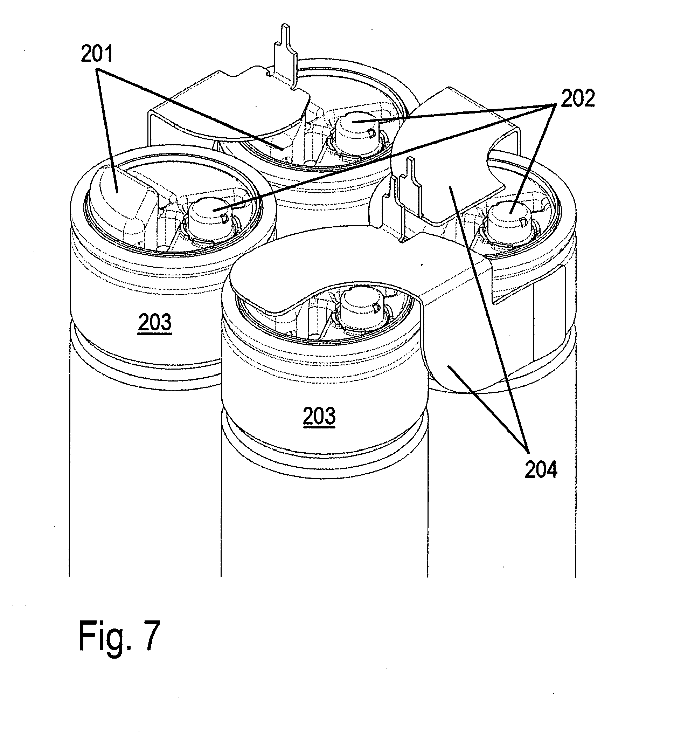

Capacitor cells of a second configuration are diagrammatically shown in Figure 7. The cells 200 of the second configuration capacitor cells are identical. This is, the positive electrode 201 of all the second type cells is provided at the top of the cell adjacent the pressure valve 202, and the negative electrode 203 is formed by the pod-shaped housing of the cells. In the embodiment of Figure 7, the housing that forms the negative electrode 203 is made of electrically conductive material, and comprises a bottom and a cylindrical, circumferential wall which is electrically isolated (at the top edge) against the positive electrode 201. It is obvious for a person skilled in the art that the negative electrode can be provided at the top of cell, and the positive electrode can be formed by the pod-shaped housing. Alternatively, the positive and negative electrode can be both provided at the top side of the cells adjacent the over-pressure valve or at the bottom side of the cells.

Further, as shown in Figure 7, the positive electrodes 201 and the negative electrodes 203 of adjacent arranged cells 200 are connected to each other via coupling elements 204 to provide a series connection of the cells. Of course, other coupling elements and several methods for securing the coupling elements to the positive and negative electrodes of the cells can be used which are known by a person skilled in the art.

The second configuration cells of Figure 7 provide the advantage that merely one type of cells has to be manufactured whereby the production costs of the cells are minimized. Further, assembly of the cells to form a cell pack is simplified.

## Claims

1. Capacitor module (100) comprising:
- at least two capacitor cells (11-14) each having a top side (11a, 12a, 13a, 14a) and a bottom side (11b, 12b, 13b, 14b) and being arranged adjacent to each other to form a pack (10) of capacitor cells, wherein said capacitor cells (11-14) each having negative (11n, 12n, 13n, 14n) and positive (11p, 12p, 13p, 14p) terminals at the top and/or bottom sides which are electrically connected to respective terminals of adjacent capacitor cells to form parallel and/or series connections between the individual capacitor cells (11-14),
- a base element (20) made of heat conductive material for supporting the pack (10) of capacitor cells (11-14), wherein the base element (20) being shaped for receiving the bottom sides of the capacitor pack cells, and
- a heat transmission element (40) provided between the pack (10) of capacitor cells (11-14) and the base element (20).

2. Capacitor module (100) according to claim 1, wherein said base element (20) comprises a base plate (21) and support elements (22) being adapted to support the received bottom sides of the capacitor pack cells.

3. Capacitor module (100) according to claims 1 or 2, wherein said base element (20) comprises a base plate (21) and a support wall (22) or support wall segments being attached to the upper surface of the base plate and being adapted for receiving the bottom sides of the capacitor pack cells therebetween.

4. Capacitor module (100) according to one of claims 1-3, wherein said base element (20) comprises a base plate (21) and a support wall (22) or support wall segments being attached to the upper surface of the base plate and being adapted to form an open top container for receiving the bottom sides of the capacitor pack cells.

5. Capacitor module (100) according to claim 4, wherein the support wall (22) or the support wall segments of the base element (20) are shaped to correspond to the outer shape of the bottom sides of the capacitor pack cells.

6. Capacitor module (100) according to one of claims 1-5, wherein the heat transmission element (40) is provided between the base element (20) and the received bottom sides of the capacitor pack cells (11-14) to improve heat dissipation from the capacitor pack cells to the base element.

7. Capacitor module (100) according to one of claims 1-6, wherein the heat transmission element (40) is provided between the base plate (21) and the support wall (22) or the support wall segments of the base element and the received bottom sides of the capacitor pack cells to improve heat dissipation from the capacitor pack cells to the base element and to provide electrical insulation between the base element and the capacitor pack cells.

8. Capacitor module (100) according to one of claims 1-7, wherein the heat transmission element (40) comprises a spacer element (30) or is adapted to act as a spacer element to provide a predetermined distance between the base element and the capacitor pack cells.

9. Capacitor module (100) according to one of claims 1-8, wherein the heat transmission element (40) comprises a liquid or flowable potting material for filling the spaces between the base element and the capacitor pack cells.

10. Capacitor module (100) according to one of claims 1-9, wherein the heat transmission element (40) comprises a liquid or flowable potting material for filling the spaces between the base element and the capacitor pack cells, wherein the potting material includes a plurality of small pearls made of glass, plastic or other suitable materials having a predetermined diameter to provide a predetermined distance between the base element and the capacitor pack cells.

11. Capacitor module (100) according to one of claims 1-10, wherein the heat transmission element (40) comprises a spacer element (30) to provide a predetermined distance between the base element and the capacitor pack cells, and potting material for filling the spaces between the base element (20), the spacer element (30) and the capacitor pack cells (11-14).

12. Capacitor module (100) according to one of claims 1-11, wherein the heat transmission element (40) comprises a thermal pad arranged between the capacitor pack cells and the base element to improve heat dissipation from the capacitor pack cells to the base element and to provide electrical insulation between the base element and the capacitor pack cells.

13. Capacitor module (100) according to claim 12, wherein a spacer element (30) is provided to achieve a predetermined distance between the base element and the capacitor pack cells.

14. Capacitor module (100) according to one of claims 1-13, wherein each of said capacitor cells comprises an over-pressure valve (11o, 12o, 13o, 14o) at the top side thereof.

15. Capacitor module (100) according to one of claims 1-14, wherein said base element (20) is made of a heat conductive material.
